# EUROPÄISCHE PATENTANMELDUNG

(11) **EP 1 178 341 A2**
(43) Veröffentlichungstag der Anmeldung: **06.02.2002**
(21) Anmeldenummer: 01118127.8
(22) Anmeldetag: 26.07.2001
(51) Int. Cl.: G02B 6/42, H04B 10/24

(54) **Optisches bidirektionales Sende- und Empfangsmodul mit einem Stiftkörper mit integriertem WDM-Filter**

(30) Priorität: 03.08.2000 DE 10037902
(71) Anmelder: Infineon Technologies AG, 81669 München (DE)
(72) Erfinder: Althaus, Hans-Ludwig, 93138 Lappersdorf (DE); Hartl, Alfred, 93186 Pettendorf (DE); Kuhn, Gerhard, 93096 Köfering (DE); Wicke, Markus, 93138 Lappersdorf-Einhausen (DE)
(74) Vertreter: Graf Lambsdorff, Matthias, Dr.

(57) **Zusammenfassung**

In einer Modulöffnung (1a) eines Modulkörpers (1) wird ein Faserstift (2) in einen inneren Hohlraum (1b) eingeschoben. Der Faserstift (2) weist eine zentrische Bohrung auf, in der eine Lichtleitfaser (2a) geführt ist. An einer abgeschrägten Endfläche befindet sich ein wellenlängenselektives Filter (3) oder ein Strahlteiler. Mit einem ersten optoelektronischen Bauelement (Sender) (4) wird Strahlung emittiert, an dem Filter (3) reflektiert und über die Lichtleitfaser (2a) in einen extern angekoppelten Lichtwellenleiter eingekoppelt, während empfangene Lichtstrahlung durch den Filter (3) hindurch tritt und auf ein zweites optoelektronisches Bauelement (Empfänger) (5) auftrifft.

## Beschreibung

Die vorliegende Erfindung betrifft ein optisches bidirektionales Sende- und Empfangsmodul zur bidirektionalen Signalübertragung mittels eines Lichtwellenleiters.

Um die hohe Datenübertragungskapazität optischer Lichtwellenleiter auszunutzen, werden in immer stärkerem Masse optische Kommunikationssysteme eingesetzt, bei denen Lichtstrahlung mit zwei oder mehr verschiedenen Wellenlängen über einen einzigen Lichtwellenleiter übertragen wird. Unter diesen Systemen sind bidirektionale Übertragungssysteme bekannt, bei denen Lichtstrahlung einer ersten Wellenlänge entlang einer Richtung in dem Lichtwellenleiter übertragen wird und Lichtstrahlung einer zweiten Wellenlänge entlang einer entgegengesetzten Richtung in dem Lichtwellenleiter übertragen wird. Die beiden Wellenlängen können gleich oder voneinander verschieden sein.

An den Endpunkten des Lichtwellenleiters befinden sich optoelektronische Module, welche sowohl eine Sende- als auch eine Empfangseinheit enthalten. Für bidirektionale Datenübertragungen über einen Lichtwellenleiter mit zwei unterschiedlichen Wellenlängen werden sogenannte BIDI-Module eingesetzt, die Licht einer Wellenlänge λ₁ senden und Licht einer Wellenlänge λ₂ empfangen können. Zur Unterdrückung des Übersprechens ist es in solchen Modulen notwendig, ein geeignetes Filter vor die Empfangseinheit zu integrieren, das die nicht gewünschte Wellenlänge herausfiltert. Hierfür werden an sich im Stand der Technik bekannte sogenannte WDM-(Wavelength Division Multiplex) Filter eingesetzt, die eine wellenlängenabhängige Filtercharakteristik aufweisen. Derartige Filter sind zumeist als sogenannte Kantenfilter ausgeführt, d.h. sie weisen bei einer bestimmten Wellenlänge einen kantenförmigen Verlauf in der Übertragungscharakteristik auf. Bei Wellenlängen oberhalb dieser Kante wirkt der Filter als hochreflektierender Spiegel, während er bei Wellenlängen unterhalb der Kante im wesentlichen durchlässig ist. Es sind auch Ausführungsformen bekannt, bei denen die beiden verwendeten Wellenlängen gleich sind und als Filter lediglich ein einfacher Strahlleiter verwendet wird.

In bisherigen im Stand der Technik bekannten Ausführungsformen bestand das BIDI-Modul aus einer Freistrahloptik, in die ein WDM-Filterplättchen unter einem Winkel von 45° in den Freistrahl in einem inneren Hohlraum des Moduls eingesetzt wurde. Diese Ausführungsformen sind jedoch relativ kompliziert herzustellen, da in dem inneren Hohlraum des Moduls geeignete Befestigungsstrukturen vorgesehen werden müssen, an denen das Filterplättchen befestigt werden kann. Die Art und Weise der Befestigung der Filterplättchen erschweren zudem eine schnelle und insbesondere automatisierte Herstellung des Moduls.

Es ist daher Aufgabe der vorliegenden Erfindung ein optisches bidirektionales Sende- und Empfangsmodul der eingangs beschriebenen Art anzugeben, welches einfacher hergestellt werden kann.

Diese Aufgabe wird durch die Merkmale des Patentanspruchs 1 gelöst.

Ein erfindungsgemäßes optisches bidirektionales Sende- und Empfangsmodul zur bidirektionalen Signalübertragung mittels eines Lichtwellenleiters weist demgemäß einen durch eine Öffnung des Moduls mindestens zum Teil in einen inneren Hohlraum des Moduls hineinragenden Stiftkörper auf, welcher an seinem inneren Ende eine einen abgeschrägten Bereich aufweisende Endfläche aufweist, wobei der abgeschrägte Bereich als Strahlteiler und/oder Filter wirkt. Ferner enthält das Modul ein erstes optoelektronisches Bauelement, welches durch die an dem Strahlteiler reflektierte Strahlung lichtoptisch mit dem Strahlteiler gekoppelt ist und ein zweites optoelektronisches Bauelement, welches durch die den Strahlteiler transmittierende Strahlung lichtoptisch mit dem Strahlteiler gekoppelt ist, wobei ein optoelektronisches Bauelement ein Sender und das andere ein Empfänger ist.

Ein wesentlicher Vorteil der Erfindung besteht darin, daß der Modulkörper einfacher hergestellt werden kann. Es müssen keine komplizierten Vorkehrungen bei der Herstellung des Modulkörpers zur späteren Befestigung eines Filterplättchens getroffen werden. Insbesondere müssen in dem inneren Hohlraum des Hohlkörpers keine speziellen Befestigungselemente zur späteren Anbringung des Filterplättchens angeordnet oder geformt werden. Vielmehr kann der Stiftkörper mit dem integrierten Strahlteiler/Filter auf einfache Weise durch die Modulöffnung in den inneren Hohlraum des Modulkörpers eingeschoben und dort beispielsweise durch Kleben befestigt werden.

In einer Ausführungsform ist bei einem erfindungsgemäßen Modul vorgesehen, daß der abgeschrägte Bereich durch ein wellenlängenselektives Filter gebildet wird, welches bei einer ersten Wellenlänge eine hohe Reflektivität und bei einer zweiten Wellenlänge eine hohe Transmissivität aufweist. Dieses wellenlängenselektive Filter kann z.B. ein Kantenfilter sein, welches für Wellenlängen, die größer sind als die Wellenlänge an einer Kante in der Übertragungsfunktion des Filters, als < 95% -Spiegel wirkt, jedoch für alle Wellenlängen unterhalb dieser Kante transparent ist. Abhängig davon, ob eine Wellenlängen- oder eine Frequenzskala verwendet wird, wird ein derartiges Filter entweder als Hochpass- oder als Tiefpassfilter bezeichnet. Ein derartiges WDM-Filter erlaubt bidirektionale Übertragung bei zwei verschiedenen Wellenlängen. Das wellenlängenselektive Filter kann auf den abgeschrägten Bereich des Stiftkörpers aufgeklebt werden. Das wellenlängenselektive Filter kann ebenso in Form von aufgedampften Schichten auf den abgeschrägten Bereich aufgebracht werden, beispielsweise als Mehrfachschichtsystem aus dielektrischen Schichten.

Es kann aber ebenso eine Ausführungsform vorgesehen sein, bei welcher der abgeschrägte Bereich des Stiftkörpers als einfacher Strahlteiler wirkt, durch den lediglich ein nicht unwesentlicher Teil von auftreffender Lichtstrahlung reflektiert und der übrige Teil transmittiert wird. In einer derartigen Ausführungsform kann ein optoelektronisches Bauelement ein bei einer Wellenlänge emittierender Sender und das zweite optoelektronische Bauelement ein bei der selben Wellenlänge sensitiver Empfänger sein. Es kann ein 3dB-Strahlteiler verwendet werden, der als Strahlteilerplättchen auf den abgeschrägten Bereich des Stiftkörpers aufgeklebt wird oder in Form dielektrischer Schichten aufgebracht wird. Eine noch einfachere Ausführungsform kann jedoch darin bestehen, daß der Stiftkörper aus durchgehend transparentem Material, beispielsweise Glasmaterial, geformt ist und eine abgeschrägte Endfläche eine natürliche Reflexionsfläche bildet, die beispielsweise unter dem Brewster-Winkel abgeschrägt ist und somit bei diesem Winkel ein Reflexionsmaximum liefert.

Eine bevorzugte Ausführungsform des Stiftkörpers sieht jedoch vor, daß dieser ein Faserstift ist, welcher eine zentrale Bohrung aufweist, in der eine Lichtleitfaser geführt ist. Dieser Faserstift kann aus einem Keramikmaterial hergestellt sein. Der Faserstift hat beispielsweise eine Länge von etwa 4 bis 5mm und besteht aus einer Keramik-Ferrule (beispielsweise ZrO oder dergleichen), welche einen Durchmesser von vorzugsweise 2,5mm oder 1,25mm aufweist. Die zentrische Bohrung der Ferrule weist einen Durchmesser von vorzugsweise 0,128mm auf und innerhalb der Bohrung ist eine Glasfaser wie eine Single-Mode-Faser oder eine Multi-Mode-Faser mit einem äußeren Manteldurchmesser von beispielsweise 0,125mm eingeklebt.

Der Stiftkörper kann derart beschaffen sein, daß er an seinem äußeren Ende an einen Lichtwellenleiter ankoppelbar ist. Wenn der Stiftkörper ein Faserstift ist, kann die Kopplung mit dem Lichtwellenleiter in an sich bekannter Weise über eine sogenannte "Stumpfkopplung" des Faserstiftes an den Lichtwellenleiter mit einem geeigneten Stecherstift, der vorzugsweise die gleichen Abmessungen wie der Faserstift aufweist, und einer geschlitzten Hülse, die die beiden Stifte spielfrei und ausreichend präzise gegeneinander führt, erfolgen.

Es kann jedoch ebenso vorgesehen sein, daß der Stiftkörper zur Gänze in den inneren Hohlraum des Moduls eingeschoben und dort befestigt wird. In diesem Fall kann vorgesehen sein, daß der anzukoppelnde Lichtwellenleiter ebenfalls in die Modulöffnung eingeschoben wird, so daß aus dem Lichtwellenleiter austretende Lichtstrahlung in den Stiftkörper bzw. die in einem als Faserstift ausgeführten Stiftkörper zentrierte Lichtleitfaser eindringen kann.

Intern kann das erfindungsgemäße Modul so beschaffen sein, daß mit dem optoelektronischen Bauelement, das mit dem Strahlteiler durch die den Strahlteiler transmittierende Strahlung lichtoptisch gekoppelt ist, ein zusätzlicher Spiegel zusammenwirkt. Dieser Spiegel kann den inneren Hohlraum des Moduls abschließen. Der Spiegel kann jedoch auch weggelassen werden und der innere Hohlraum kann sich bis zu einem der Lichteintrittsöffnung des Moduls gegenüberliegenden Ende des Moduls erstrecken. An diesem Ende kann das entsprechende optoelektronische Bauelement angeordnet sein.

Die optoelektronischen Bauelemente können in an sich bekannter Weise als TO-Module in entsprechenden Öffnungen des Moduls eingesetzt sein. In einer bevorzugten Ausführungsform ist das erfindungsgemäße Modul jedoch als oberflächenmontierbares d.h. SMT-(Surface Mounting Technology) fähiges Modul ausgeführt, bei welchem die optoelektronischen Bauelemente auf ein und der selben Seite des Moduls angeordnet sind und elektrische Zuführungsleitungen von den Bauelementen ausgehend zu einer gemeinsamen Montageoberfläche des Moduls geführt werden und dort flächige Anschlußpads ausgebildet werden.

Im folgenden wird ein einziges Ausführungsbeispiel anhand der Zeichnungsfigur näher erläutert, in der ein erfindungsgemäßes optisches bidirektionales Sende- und Empfangsmodul dargestellt ist.

Ein derartiges Modul weist einen Modulkörper 1 auf, der eine Stifteinführungsöffnung 1a und einen sich an die Stifteinführungsöffnung 1a anschließenden inneren Hohlraum 1b aufweist. In die Stifteinführungsöffnung 1a wird ein als Faserstift 2 ausgeführter Stiftkörper eingeführt und darin befestigt wie beispielsweise eingeklebt. Der Faserstift 2 besteht beispielsweise aus Keramikmaterial wie ZrO oder dergleichen und weist eine axiale zentrische Bohrung auf, in der eine Lichtleitfaser 2a eingeklebt ist. An seinem inneren Ende weist der Faserstift 2 eine abgeschrägte Endfläche auf, auf der ein wellenlängenselektives (WDM-Filter) 3 aufgebracht ist. Das Filter 3 kann in Form von mehrfachen dielektrischen Schichten auf der abgeschrägten Endfläche des Faserstiftes 2 aufgebracht sein. Es kann auch vorgesehen sein, daß nicht die gesamte Endfläche des Faserstiftes 2 abgeschrägt ist, sondern nur in einem Bereich, in dem die Lichtleitfaser 2a endet, da es nur auf die Umlenkung des aus der Lichtleitfaser 2a austretenden Strahlungsbündels ankommt.

Das Filter 3 ist beispielsweise als Kantenfilter ausgebildet, so daß es Lichtstrahlung, deren Wellenlänge unterhalb der Kante liegt, hindurchläßt und Lichtstrahlung deren Wellenlänge oberhalb der Kante liegt, reflektiert. Mit der an dem Filter 3 reflektierten Lichtstrahlung ist der Filter 3 mit einem ersten optoelektronischen Bauelement 4 lichtoptisch gekoppelt. Mit der den Filter 3 transmittierenden Lichtstrahlung ist der Filter 3 mit einem zweiten optoelektronischen Bauelement 5 lichtoptisch gekoppelt. In dem dargestellten Ausführungsbeispiel ist das erste optoelektronische Bauelement 4 ein Sender und das zweite optoelektronische Bauelement 5 ein Empfänger. Es kann jedoch auch der umgekehrte Fall auftreten, in dem das erste optoelektronische Bauelement 4 ein Empfänger und das zweite optoelektronische Bauelement 5 ein Sender ist.

Der innere Hohlraum 1b des Modulkörpers 1 ist an seinem linksseitigen Ende durch eine abgeschrägte Endfläche abgeschlossen, die mit einem Spiegel 6 versehen ist, an der die empfangene Lichtstrahlung reflektiert und auf das zweite optoelektronische Bauelement 5 gerichtet wird. Der Filter 3 und der Spiegel 6 sind somit derart schräg gestellt, daß sie lichtoptisch mit optoelektronischen Bauelementen gekoppelt sind, die auf einer Seite des Modulkörpers 1 angeordnet werden können. An den inneren Hohlraum 1b schließen sich dementsprechend Hohlräume 1c und 1d an, die rechtwinklig von dem inneren Hohlraum 1b ausgehend bis zu der entsprechenden Seitenfläche des Modulkörpers 1 führen, an der die optoelektronischen Bauelemente 4 und 5 angekoppelt werden können. Die inneren Hohlräume 1c und 1d sind jeweils dem Filter 3 und dem Spiegel 6 zugeordnet.

Wie dargestellt können die optoelektronischen Bauelemente 4 und 5 in Sender- und Empfänger-Subkomponenten 4a und 5a eingebaut werden und die Subkomponenten können als eigene Gehäuse hergestellt und geprüft werden und dann an den Modulkörper 1 justiert und fixiert werden. Die Subkomponenten 4a und 5a können SMD-fähig ausgebildet sein, so daß das komplett zusammengebaute Modul mit der SMT-Technik auf einer Platine aufgelötet werden kann.

Der Spiegel 6 kann ebenfalls durch auf die abgeschrägte Endfläche des inneren Hohlraums 1b aufgedampfte dielektrische Schichten gebildet sein. Es kann auch vorgesehen sein, daß anstelle des Spiegels 6 ein weiterer wellenlängenselektiver Filter 3 angeordnet ist und daß sich der innere Hohlraum 1b hinter diesem weiteren Filter 3 fortsetzt und daß ein weiteres optoelektronisches Bauelement wie ein Sender oder ein Empfänger an dem Modulkörper 1 angeordnet ist.

In der bereits beschriebenen Weise kann an dem äußeren Ende des Faserstiftes 2 eine Lichtwellenleiter angekoppelt werden, in dem das von dem Sender 4 emittierte Strahlungsbündel und das von dem Empfänger 5 empfangene Strahlungsbündel bidirektional geführt werden.

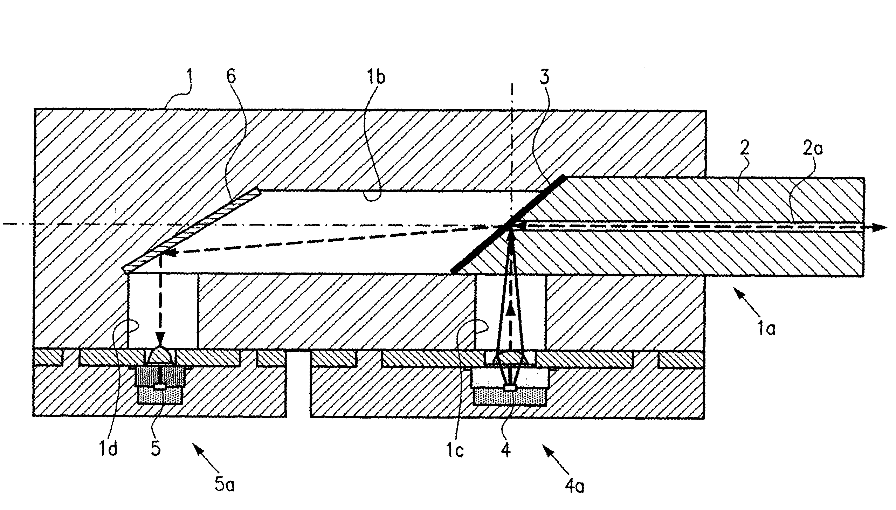

## Patentansprüche

1. Optisches bidirektionales Sende- und Empfangsmodul zur bidirektionalen Signalübertragung mittels eines Lichtwellenleiters, mit
- einem durch eine Modulöffnung (1a) mindestens zum Teil in einen inneren Hohlraum (1b) des Modulkörpers (1) hineinragenden Stiftkörper (2), welcher
- an seinem inneren Ende eine einen abgeschrägten Bereich aufweisende Endfläche aufweist, welcher abgeschrägte Bereich als Strahlteiler und/oder Filter (3) wirkt,
- ein erstes optoelektronisches Bauelement (4), welches durch an dem Strahlteiler (3) reflektierte Strahlung lichtoptisch mit dem Strahlteiler (3) gekoppelt ist, und
- ein zweites optoelektronisches Bauelement (5), welches durch den Strahlteiler (3) transmittierende Strahlung lichtoptisch mit dem Strahlteiler (3) gekoppelt ist, wobei ein optoelektronisches Bauelement ein Sender und das andere ein Empfänger ist.

2. Modul nach Anspruch 1,
**dadurch gekennzeichnet,daß**
- der abgeschrägte Bereich durch ein wellenlängenselektives Filter (3) gebildet wird, welches bei einer ersten Wellenlänge eine hohe Reflektivität und bei einer zweiten Wellenlänge eine hohe Transmissivität aufweist, und
- ein optoelektronisches Bauelement (4) ein bei einem der beiden Wellenlängen emittierender Sender und das andere optoelektronische Bauelement (5) ein bei der anderen Wellenlänge sensitiver Empfänger ist.

3. Modul nach Anspruch 1,
**dadurch gekennzeichnet,daß**
- ein optoelektronisches Bauelement ein bei einer Wellenlänge emittierender Sender und das andere optoelektronische Bauelement ein bei der selben Wellenlänge sensitiver Empfänger ist, und
- durch den Strahlteiler (3) ein Teil der Strahlung bei dieser Wellenlänge reflektiert und der übrige Teil transmittiert wird.

4. Modul nach einem der vorhergehenden Ansprüche
**dadurch gekennzeichnet,daß**
- der Stiftkörper (2) ein Faserstift ist, welcher eine zentrale Bohrung aufweist, in welcher eine Lichtleitfaser (2a) geführt ist.

5. Modul nach Anspruch 4,
**dadurch gekennzeichnet,daß**
- der Faserstift (2) aus einem Keramikmaterial, insbesondere aus ZrO, hergestellt ist.

6. Modul nach einem der vorgehenden Ansprüche,
**dadurch gekennzeichnet,daß**
- der Stiftkörper (2) an seinem äußeren Ende an einen Licht-wellenlighter ankoppelbar ist.

7. Modul nach einem der vorhergehenden Ansprüche,
**dadurch gekennzeichnet, daß**
- das zweite optoelektronische Bauelement (5) durch einen zusätzlichen Spiegel (6) lichtoptisch mit dem Strahlteiler (3) gekoppelt ist.
